(19) Europäisches Patentamt
European Patent Office
Office européen des brevets

(11) Veröffentlichungsnummer: **0 207 317 B1**

(12) **EUROPÄISCHE PATENTSCHRIFT**

(45) Veröffentlichungstag der Patentschrift: **10.03.93**

(21) Anmeldenummer: **86107584.4**

(22) Anmeldetag: **04.06.86**

(51) Int. Cl.5: **C09B 69/06**, C09D 11/02, C08K 5/00, G11B 7/24, H01L 31/02, //C09B23/00, C09B47/16,C09B47/22, C09B47/32

# (54) Pigmente, deren Herstellung und deren Verwendung.

(30) Priorität: **05.06.85 DE 3520109**

(43) Veröffentlichungstag der Anmeldung:
**07.01.87 Patentblatt 87/02**

(45) Bekanntmachung des Hinweises auf die Patenterteilung:
**10.03.93 Patentblatt 93/10**

(84) Benannte Vertragsstaaten:
**BE CH DE FR GB IT LI NL**

(56) Entgegenhaltungen:
**EP-A- 0 176 059**
**EP-A- 0 180 116**
**EP-A- 0 183 311**

(73) Patentinhaber: **BASF Aktiengesellschaft**
**Carl-Bosch-Strasse 38**
**W-6700 Ludwigshafen(DE)**

(72) Erfinder: **Flohr, Helmut, Dr.**
**Bleichstrasse 92**
**W-6500 Mainz/Weisenau(DE)**
Erfinder: **Jesse, Joachim, Dr.**
**Im Spiess 10**
**W-6714 Weisenheim am Sand(DE)**
Erfinder: **Albert, Bernhard, Dr.**
**Rietburgstrasse 13**
**W-6701 Maxdorf(DE)**
Erfinder: **Neumann, Peter, Dr.**
**Franz-Schubert-Strasse 1**
**W-6908 Wiesloch(DE)**

EP 0 207 317 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.5x/3.0.1)

## Beschreibung

Es sind viele organische Substanzen bekannt, die im langwelligen sichtbaren Spektralbereich und nahen IR absorbieren.

Für eine Reihe von Anwendungen haben viele dieser Substanzen den Nachteil, daß sich deren Morphologie nicht in der geforderten Weise erhalten oder modifizieren läßt oder daß sich diese Substanzen vor, während und/oder noch der Verarbeitung in unerwünschter Weise verändern, z.B. durch Kristallisation. Ausbleichen durch Licht oder Wärme, Ausbluten, Auskreiden.

Weiterhin sind aus den EP-A-180 116 und 183 311 Pigmente bekannt, die durch Ausfällen kationischer Tri- oder Pentamethinfarbstoffe mit Heteropolysäuren erhalten werden. Diese unterscheiden sich jedoch von den erfindungsgemäßen Pigmenten durch die Art der Endgruppen des konjugierten Systems.

Aufgabe der vorliegenden Erfindung war es, neue über 700 nm absorbierende Pigmente aufzufinden, welche die Nachteile der IR-absorbierenden Verbindungen des Standes der Technik nicht aufweisen.

Diese Aufgabe wird durch die erfindungsgemäßen Pigmente gelöst.

Die Erfindung betrifft dementsprechend Pigmente der allgemeinen Formel (I)

F • Het (I)

in der

F für ein Kation eines kationischen Farbstoffs mit einem Absorptionsmaximum > 700 nm, der gegebenenfalls noch anionische Gruppen enthält, der allgemeinen Formeln

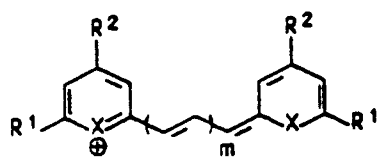

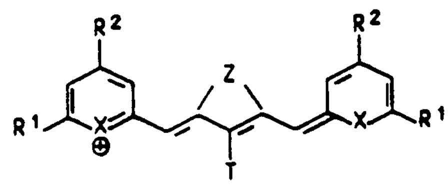

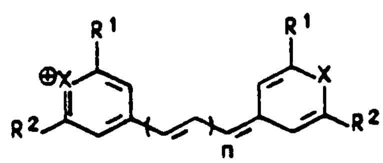

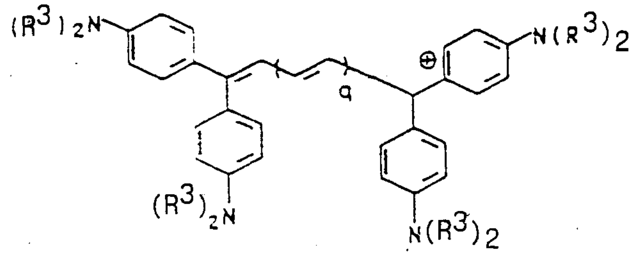

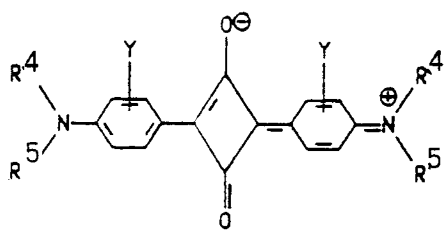

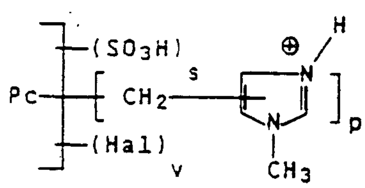

oder

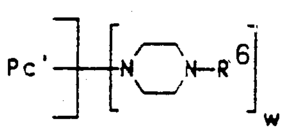

steht, wobei in den Formeln $R^1$ und $R^2$ unabhängig voneinander für $C_1$- bis $C_4$-Alkyl, für gegebenenfalls durch Hydroxy, $C_1$- bis $C_4$-Alkyl, $C_1$- bis $C_4$-Alkoxy oder Halogen substituiertes Phenyl oder Heteroaryl,
Z für $-(CH_2-)_r$, worin r = 2 oder 3 bedeutet,
T für Phenyl oder Halogen,
X für Sauerstoff oder Schwefel,
m und n jeweils für 0, 1 oder 2,
$R^3$ unabhängig voneinander für $C_1$- bis $C_4$-Alkyl,
q für 1 oder 2,
$R^4$ und $R^5$ unabhängig voneinander für Wasserstoff, $C_1$- bis $C_6$-Alkyl, $C_2$- bis $C_6$-Hydroxyalkyl, $C_1$- bis $C_4$-Alkoxy-$C_2$- oder -$C_3$-alkyl, Allyl, 2-($C_2$- bis $C_4$-Alkanoyloxy)-ethyl oder 2-Cyanethyl oder

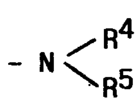

für einen Rest eines gesättigten 5- oder 6-gliedrigen heterocyclischen Rings,
Y für Wasserstoff, Hydroxy, $C_1$- bis $C_4$-Alkyl oder $C_1$- bis $C_4$-Alkoxy,
Pc für einen (p + s + v)-wertigen Rest eines metallfreien Phthalocyanins oder eines Metallphthalocyanins, das als zentrales Metall VO, TiO, Pb, Sn, Cu, Ni oder Mn enthält,
und wobei die Methylengruppe an ein C-Atom des Imidazolrings gebunden ist,
p für eine Zahl von 1 bis 4,
s für 0 oder 1,
v für 0, 1, 2, 3 oder 4,

Pc' für einen w-wertigen Rest eines metallfreien Phthalocyanins oder eines Metallphthalocyanins, das als zentrales Metall VO, TiO, Pb, Sn, Cu, Ni oder Mn enthält,
Hal für Brom, vorzugsweise für Chlor oder Fluor,
$R^5$ für $C_1$- bis $C_4$-Alkyl, $C_2$- bis $C_4$-Hydroxyalkyl, $C_2$- bis $C_4$-Aminoalkyl und
w für 1, 2, 3 oder 4 stehen, und
Het ein Anion einer Heteropolysäure auf der Basis Wolfraum Molybdän, Vanadium oder Gemischen davon mit Phosphor, Silicium, Kobalt, Aluminium, Mangan, Chrom, Nickel oder Gemischen davon oder ein Kupfer-(I)-hexacyanoferrat-(II)-Anion $[Cu_3\ Fe(CN)_6]^e$ bedeutet,
erhältlich durch Verlacken der kationischen Farbstoffe mit den Heteropolysäuren.

Die erfindungsgemäßen Pigmente bestehen aus gleichmäßigen feinen Teilchen, deren Durchmesser je nach Herstellung im Bereich von ca. 10 nm bis 1000 nm liegt.

Viele Nachteile der löslichen Farbstoffe können mit Hilfe der Farblacke der vorliegenden Erfindung umgangen werden.

Die neuen Pigmente (I) lassen sich leicht in Polymeren einarbeiten, wobei die Polymeren in Form einer Lösung oder in der Masse pigmentiert werden können. Weiterhin können zum Einarbeiten in Polymere auch Dispersionen von (I) verwendet werden. Dabei können die Pigmente in hoher Konzentration homogen verteilt werden. Auf Oberflächen lassen sich die Farblacke (I) nach bekannten Methoden aufbringen, ebenso können sie nach bekannten drucktechnischen Methoden, wie Hoch-, Tief- oder Offsetdruck verarbeitet werden. So können z.B. mit IR-Lichtquellen lesbare Streifen-Codes ("bar codes") durch Drucken hergestellt werden.

Die Dispersionen der Pigmente (I) können außerdem als Absorberschicht in optischen Speichermedien verwendet werden.

Die Pigmente gemäß der vorliegenden Erfindung können weiterhin zur IR-Absorption in Kunststoffen oder als Absorberschicht in Solarkollektoren benutzt werden.

(I) enthaltende Folien können auch bei bestimmten Anwendungen zur Signalsteuerung durch langwellig emittierende Photodioden, z.B. zur Endabschaltung von Video- oder Audiobändern, verwendet werden.

Als Pigmente (I) kommen vor allem solche in Betracht, bei denen das Farbstoffkation F den allgemeinen Formeln (II) bis (VII) entspricht:

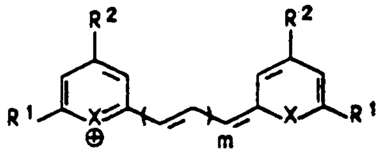

(II),

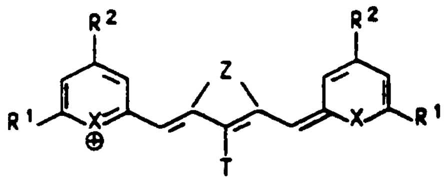

(IIa),

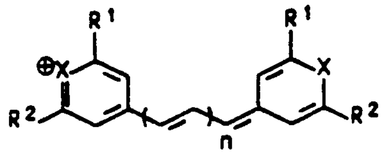

(III),

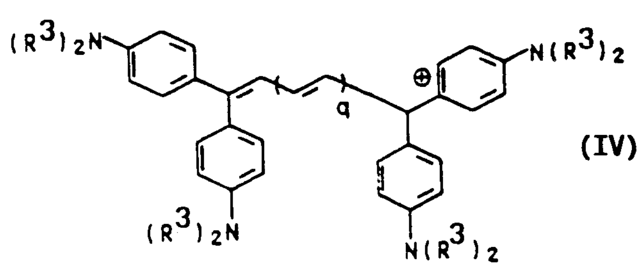

(IV),

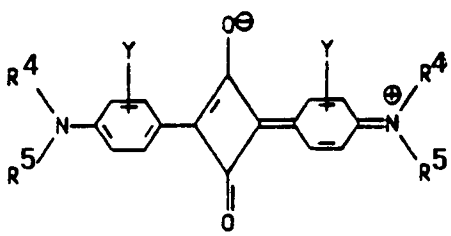

(V),

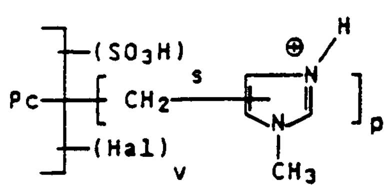

(VI) und

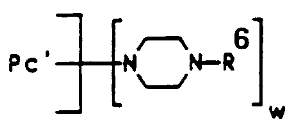

(VII),

In den Formeln bedeuten:

$R^1$ und $R^2$ unabhängig voneinander $C_1$- bis $C_4$-Alkyl, gegebenenfalls durch Hydroxy, $C_1$- bis $C_4$-Alkyl, $C_1$-

bis $C_4$-Alkoxy oder Halogen substituiertes Phenyl oder Heteroaryl;
X Sauerstoff oder Schwefel;
Z $-(CH_2-)_r$ mit r = 2 oder 3;
T Phenyl oder Halogen wie Brom oder Chlor, vorzugsweise Phenyl oder Chlor;
m und n jeweils 0, 1 oder 2;
$R^3$ unabhängig voneinander $C_1$- bis $C_4$-Alkyl;
q 1 oder 2;
$R^4$ und $R^5$ unabhängig voneinander Wasserstoff, $C_1$- bis $C_6$-Alkyl, $C_2$- bis $C_6$-Hydroxyalkyl, $C_1$- bis $C_4$-Alkoxy-$C_2$- oder -$C_3$-alkyl, Allyl, 2-($C_2$- bis $C_4$-Alkanoyloxy)-ethyl oder 2-Cyanethyl oder

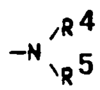

den Rest eines gesättigten 5- oder 6-gliedrigen heterocyclischen Rings;
Y Wasserstoff, Hydroxy, $C_1$- bis $C_4$-Alkyl oder $C_1$- bis $C_4$-Alkoxy;
Pc einen (p + s + v)-wertigen Rest eines metallfreien Phthalocyanins oder eines Metallphthalocyanins mit VO, TiO, Pb, Sn, Cu, Ni oder Mn als zentrales Metallatom und wobei die Methylengruppe an ein C-Atom des Imidazolrings gebunden ist;
p eine Zahl von 1 bis 4;
s = 0 oder 1;
v = 0, 1, 2, 3 oder 4;
Pc', einen w-wertigen Rest eines metallfreien Phthalocyanins oder eines Metallphthalocyanins, das als zentrales Metall VO, TiO, Pb, Sn, Cu, Ni oder Mn enthält;
Hal Brom, vorzugsweise Chlor oder Fluor;
$R^6$ $C_1$- bis $C_4$-Alkyl, $C_2$- bis $C_4$-Hydroxylalkyl; $C_2$- bis $C_4$-Aminoalkyl und
w 1, 2, 3 oder 4.

Im einzelnen sind z.B. zu nennen:
Halogen steht für Fluor, Brom und insbesondere für Chlor.

Für $R^1$ und $R^2$: $C_1$- bis $C_4$-Alkyl wie Methyl, Ethyl, Propyl und Butyl; Phenyl, 2-, 3- und 4-Tolyl, 2-, 3- und 4-Ethylphenyl, 3- und 4-n- und i-Propylphenyl, 3- und 4-n-, i- und tert.Butylphenyl, 2-, 3- und 4-Chlorphenyl, 3- und 4-Bromphenyl, 3- und 4-Methoxyphenyl, 3- und 4-Ethoxyphenyl, von denen die in 4-Stellung substituierten Phenylreste bevorzugt sind;
Heteroaryl wie 2- und 3-Thienyl, 5-Thiazolyl und 2- und 3-Furanyl;
T: Phenyl, Chlor oder Brom, vorzugsweise Phenyl und Chlor;
Z:

$$-(CH_2)_2 \text{ und } -(CH_2)_3.$$

Für $R^3$: unabhängig voneinander $C_1$- bis $C_4$-Alkyl, insbesondere Methyl und Ethyl.

Für $R^4$ und $R^5$: Wasserstoff, $C_1$- bis $C_6$-Alkyl wie Methyl, Ethyl, n- und i-Propyl, n- und i-Butyl, Pentyl und n-Hexyl; $C_2$- bis $C_4$-Hydroxyalkyl wie 2-Hydroxyethyl, 2- und 3-Hydroxypropyl;
$C_1$- bis $C_4$-Alkoxy-$C_2$- oder $C_3$-alkyl wie 2-Methoxyethyl, 2-Ethoxyethyl, 2-n- und 2-i-Propoxyethyl, 2-n-Butoxyethyl, 3-Methoxypropyl, 3-Ethoxypropyl, 3-n- und i-Propoxylpropyl, 3-n-Butoxypropyl;
Allyl; 2-($C_2$- bis $C_4$-Alkanoyloxy)-ethyl wie 2-Acetoxyethyl, 2-Propionoxyethyl und 2-Butyryloxyethyl; 2-Cyanethyl.

Für

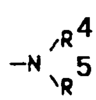

kommen außerdem
Reste von gesättigten 5- oder 6-gliedrigen heterocyclischen Ringen in Betracht wie Pyrrolidinyl, Piperidinyl, Morpholinyl, Thiomorpholinyl, Piperazinyl und N'-$C_1$- bis $C_4$-Alkylpiperazinyl wie N'-Methyl-, N'-Ethyl- und

N'-Butylpiperazinyl.

Für Y: Wasserstoff, Hydroxy, $C_1$- bis $C_4$-Alkyl wie Methyl, Ethyl, n- und i-Propyl, n-, i- und -tert.Butyl; $C_1$- bis $C_4$-Alkoxy wie Methoxy, Ethoxy, n- und i-Propoxy und n-Butoxy.

Für $R^6$: $C_1$- bis $C_4$-Alkyl wie Methyl, Ethyl, Propyl, n- und i-Butyl, $C_2$- bis $C_4$-Hydroxyalkyl und $C_2$- bis $C_4$-Aminoalkyl: 2-Hydroxyethyl, 2- und 3-Hydroxypropyl, 2-, 3- und 4-Hydroxybutyl, 2-Aminoethyl, 2- und 3-Aminopropyl, 4-Aminobutyl.

Bevorzugt sind Pigmente (I), die Kationen der Formeln (II), (IV), (VI) oder (VII) enthalten, worin
$R^1$ und $R^2$ für Phenyl, für $C_1$- bis $C_4$-Alkylphenyl, $C_1$- bis $C_4$-Alkoxyphenyl, 4-Hydroxyphenyl, 2-Thienyl oder Methyl,
m für 1 oder 2,
$R^3$ unabhängig voneinander für $C_1$- bis $C_4$-Alkyl, insbesondere Methyl und Ethyl,
q für 1 oder 2,
Pc für einen Metallphthalocyaninrest mit VO, Pb, Mn oder Sn als Zentralatom,
p für 1, 2, 3 oder 4,
s für 0,
Hal für Fluor,
v für 0 oder 4,
Pc' für einen w-wertigen Metallphthalocyaninrest mit VO, Pb, Mn oder Sn als Zentralatom,
$R^6$ für $C_1$-$C_4$-Alkyl, 2-Hydroxyethyl oder 2-Aminoethyl und
w für 4 stehen.

Besonders hervorzuheben sind Pigmente (I), in denen F eines der folgenden Kationen ist:

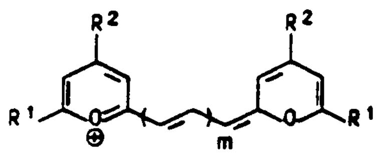

(VIII)

| Kation | $R^1$ | $R^2$ | m |
| --- | --- | --- | --- |
| VIII.1 | 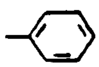 | 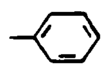 | 1 |
| VIII.2 | 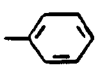 | 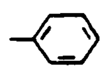 | 2 |
| VIII.3 | 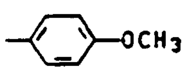 | 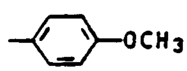 | 1 |
| VIII.4 | - | - | 2 |
| VIII.5 | 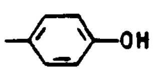 | 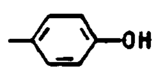 | 1 |
| VIII.6 | - | - | 2 |
| VIII.7 | 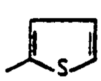 | 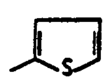 | 1 |
| VIII.8 | - | - | 2 |
| VIII.9 | $-CH_3$ | $-CH_3$ | 1 |
| VIII.10 | $-CH_3$ | $-CH_3$ | 2 |

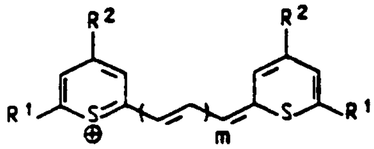

(IX)

| Kation | $R^1$ | $R^2$ | m |
|---|---|---|---|
| IX.1 | 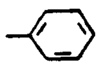 | 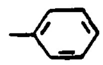 | 1 |
| IX.2 | 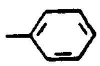 | 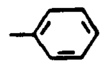 | 2 |
| IX.3 | 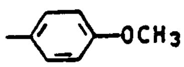 | 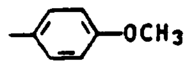 | 1 |
| IX.4 | - | - | 2 |
| IX.5 | 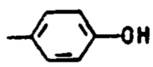 | 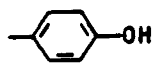 | 1 |
| IX.6 | - | - | 2 |
| IX.7 | 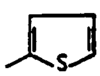 | 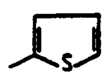 | 1 |
| IX.8 | - | - | 2 |
| IX.9 | $-CH_3$ | $-CH_3$ | 1 |
| IX.10 | $-CH_3$ | $-CH_3$ | 2 |

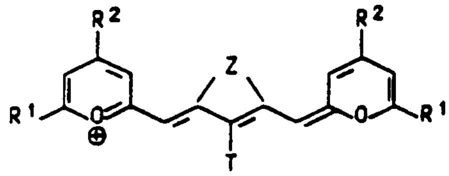

(X)

| Kation | $R^1 = R^2$ | Z | T |
|---|---|---|---|
| X.1 | 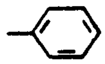 | $-(CH_2)_2-$ | $-Cl$ |
| X.2 | 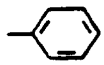 | $-(CH_2)_2-$ | 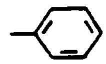 |
| X.3 | 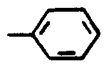 | $-(CH_2)_3-$ | $-Cl$ |
| X.4 | 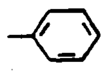 | $-(CH_2)_3-$ | 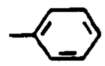 |
| X.5 | $-CH_3$ | $-(CH_2)_2-$ | $-Cl$ |
| X.6 | $-CH_3$ | $-(CH_2)_2-$ | 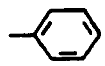 |
| X.7 | $-CH_3$ | $-(CH_2)_3-$ | $-Cl$ |
| X.8 | $-CH_3$ | $-(CH_2)_3-$ | 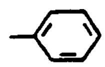 |
| X.9 | 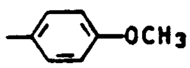 | $-(CH_2)_3-$ | $-Cl$ |
| X.10 | 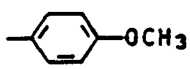 | $-(CH_2)_3-$ | 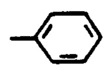 |

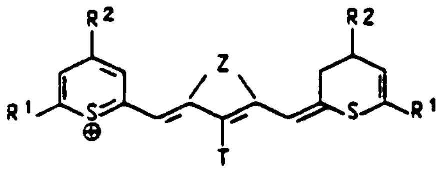

(XI)

| Kation | $R^1 = R^2$ | Z | T |
|---|---|---|---|
| XI.1 | 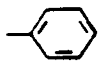 | $-(CH_2)_2$ | $-Cl$ |
| XI.2 | 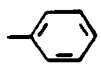 | $-(CH_2)_2$ | 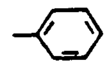 |
| XI.3 | 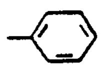 | $-(CH_2)_3$ | $-Cl$ |
| XI.4 | 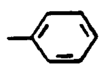 | $-(CH_2)_3$ | 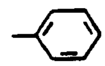 |
| XI.5 | $-CH_3$ | $-(CH_2)_2$ | $-Cl$ |
| XI.6 | $-CH_3$ | $-(CH_2)_2$ | 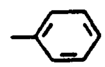 |
| XI.7 | $-CH_3$ | $-(CH_2)_3$ | $-Cl$ |
| XI.8 | $-CH_3$ | $-(CH_2)_3$ | 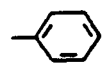 |
| XI.9 | 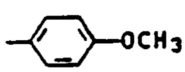 | $-(CH_2)_3-$ | $-Cl$ |
| XI.10 | 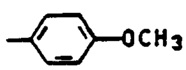 | $-(CH_2)_3-$ | 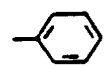 |

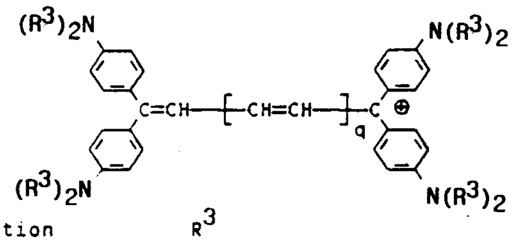

(XII)

| Kation | $R^3$ |
|---|---|

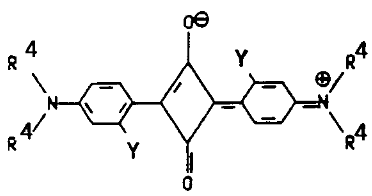

(XIII)

| Kation | 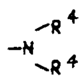 | Y |
|---|---|---|
| XIII.1 | $-N(CH_3)_2$ | $-H$ |
| XIII.2 | $-N(C_2H_5)_2$ | $-H$ |
| XIII.3 | 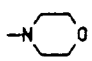 | $-H$ |
| XIII.4 | 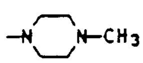 | $-H$ |
| XIII.5 | 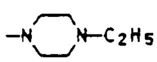 | $-H$ |
| XIII.6 | $-N(C_2H_5)_2$ | $-OH$ |
| XIII.7 | $-N(CH_3)_2$ | $-OH$ |
| XIII.8 | 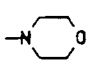 | $-OH$ |
| XIII.9 | 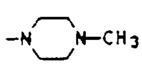 | $-OH$ |
| XIII.10 | 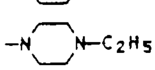 | $-OH$ |

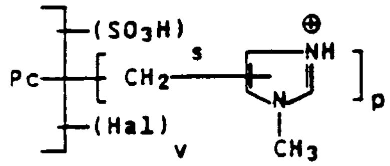

(XIV)

| Kation | Pc | p | s | Hal | v |
|---|---|---|---|---|---|
| XIV.1 | VOPhth | 1 | 0 | - | 0 |
| XIV.2 | VOPhth | 2 | 0 | - | 0 |
| XIV.3 | MnPhth | 1 | 0 | - | 0 |
| XIV.4 | MnPhth | 2 | 0 | - | 0 |
| XIV.5 | PbPhth | 2 | 0 | - | 0 |
| XIV.6 | PbPhth | 1 | 0 | - | 0 |
| XIV.7 | SnPhth | 1 | 0 | - | 0 |
| XIV.8 | SnPhth | 2 | 0 | - | 0 |
| XIV.9 | VOPhth | 1 | 0 | F | 4 |
| XIV.10 | VOPhth | 2 | 0 | F | 4 |

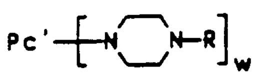

(XV)

| Kation | Pc' | R | w |
|---|---|---|---|
| XV.1 | VOPhth | $-CH_3$ | 4 |
| XV.2 | VOPhth | $-C_2H_5$ | 4 |
| XV.3 | VOPhth | $-CH_2-CH_2-OH$ | 4 |
| XV.4 | VOPhth | $-CH_2-CH_2-NH_2$ | 4 |

Die F entsprechenden kationischen Farbstoffe sind bekannt oder können nach bekannten Verfahren hergestellt werden.

Für "Het" kommen Heteropolysäuren auf der Basis Wolfram, Molybdän, Vanadium oder Gemischen davon mit Phosphor, Silicium, Kobalt, Aluminium, Mangan, Chrom, Nickel oder Gemischen davon in Betracht. Bevorzugt sind die Heteropolysäuren des Wolframs, des Molybdäns, des Molybdäns und Wolframs mit Phosphor, Silicium und/oder Vanadium. Ebenso kommt das Kupfer(I)-hexacyanoferrat-(II)-anion in Betracht.

Die Herstellung der Heteropolysäuren bzw. der Salze dieser Säuren ist bekannt. Die Säuren werden durch Ansäuern von Lösungen der Wolframate, Molybdate und/oder Vanadate in Form der Alkali- und/oder Ammoniumsalze in Gegenwart von Phosphat und/oder wasserlöslichen Silikaten erhalten. Dabei können durch Wahl der Verhältnisse Wolframat, Molybdat, Vanadat und Phosphat und/oder Kieselsäure bzw. deren Salzen verschiedenartige Heteropolysäuren aufgebaut werden. Als Beispiele für Heteropolysäuren sind zu nennen:
Phosphormolybdänsäure, Silicomolybdänsäure, Phosphorwolframsäure, Silicowolframsäure, Phosphorvanadinsäure, Silicovanadinsäure, Phosphorwolfram-molybdänsäure, Silico-wolfram-molybdänsäure, Phosphor- und Silico-wolfram-vanadinsäure sowie Phosphor-silico-wolfram-molybdänsäure,die gegebenenfalls noch Vanadin eingebaut enthält.

Bevorzugt sind Phosphormolybdänsäure, Silicomolybdänsäure, Phosphor-wolfram-molybdänsäure und Silico-wolfram-molybdänsäure. Die Herstellung der Pigmente (I) erfolgt nach an sich bekannten Verfahren durch Verlackung der kationischen Farbstoffe, die F als Kation enthalten, mit den Heteropolysäuren.

Um Pigmente mit besserer Kornweichheit oder leichter dispergierbare Pigmente zu erhalten, kann der wäßrige Filterkuchen mittels Gefriertrocknung in ein trockenes Pulver überführt werden.

Ein anderer Weg ist die Belegung der gefällten Pigmente in wäßriger Suspension mit einer Emulsion von Ölsäureethanolamid und $C_{13}/C_{15}$-Paraffinen in Wasser oder in Gegenwart von aliphatischen Aminen mit mindestens 10 C-Atomen, von langkettigen Alkylaminoalkansäuren, von sauren oder neutralen Phosphorsäureestern, Schwefelsäurehalbestern, langkettigen Alkan- und Alkensäuren, Alkylbenzolsulfonsäuren, EO-Addukten an Alkylphenolen, an langkettigen Alkanolen oder Alkylaminen, Polypropylen/Polyethylenblockcopolymeren oder Alkylphenolen (DE-OS 34 35 433).

Im Falle der Verarbeitung von (I) zu Druckfarben, die Nitrocellulose als Bindemittel enthalten, können zur Erhöhung der Stabilität Verbindungen zugegeben werden, die $-N(CH_2COOH)_2$-Gruppen enthalten, z.B. Nitrilotriessigsäure oder Diethylendiamin-tetraessigsäure (DE-OS 27 07 972).

Die Herstellung der erfindungsgemäßen Pigmente ist in den Beispielen weiter erläutert.

Die durch Verlackung erhaltenen und isolierten Pigmente sind direkt anwendbar.

Eine weitere Aufgabe der vorliegenden Erfindung war es, für optische Aufzeichnungsmedien eine Licht absorbierende Schicht zur Verfügung zu stellen, welche den an solche Schichten gestellten Anforderungen genügen, die einfach herzustellen, die über lange Zeit stabil, frei von Korrosion und ungiftig sind. Außerdem sollten diese Aufzeichnungsmedien mit einem Laser, wie dem He-Ne-Laser oder vorzugsweise mit einem Halbleiterlaser beschrieben und gelesen werden können.

Es wurde gefunden, daß überlegene optische Aufzeichnungsmedien vorliegen, wenn diese in der Licht absorbierenden Schicht mindestens ein Pigment der Formel (I) enthalten.

Die erfindungsgemäß anzuwendenden Pigmente können als Dispersion in an sich bekannter Weise durch Tauchen, Rakeln, Sprühen, Schleudern oder nach einem der bekannten Druckverfahren aufgebracht werden.

Die (I) enthaltenden Aufzeichnungsmedien weisen eine hohe Absorption bei Wellenlängen >700 nm auf. Diese Schichten sind im Gegensatz zu Schichten, welche Farbstoffe im molekulardispersen (d.h. gelösten) Zustand enthalten, gegen störende Veränderungen stabil. Die erfindungsgemäßen Schichten kristallisieren nicht, sind gegenüber Licht und Umwelteinflüssen wie Licht und Feuchtigkeit, sowie bei erhöhter Temperatur stabil. Wegen der hohen Absorption sind die neuen Aufzeichnungsmedien sehr empfindlich gegenüber dem Licht von Halbleiter-Lasern mit Emissionswellenlängen zwischen 750-900 nm.

Der Aufbau der Aufzeichnungsmedien ist an sich bekannt und Stand der Technik (vergl. z.B. US-PS 40 79 895, 42 42 689, 42 41 355, 40 23 185 und 43 80 769; DE-OS 30 07 296 und 30 14 677; JP-OS 1 12 793/1983. 1 32 231/1983, 1 12 790/1983, 1 25 246/1983 und 56 892/1983; EP-A 84 729).

Als Träger kommen z.B. gegebenenfalls verspiegelte Scheiben/Platten aus Glas, Kunststoff, wie Polymethylmethacrylat, Polystyrol oder Polycarbonat, oder aus Metall, wie Aluminium, in Betracht.

Unter der lichtabsorbierenden Schicht kann eine reflektierende Schicht vorhanden sein, so daß das eingestrahlte und durch die farbige Schicht wandernde Licht (soweit es nicht absorbiert wird) an der Reflektorschicht reflektiert wird und nochmals durch die gefärbte Schicht wandert.

Die Belichtung kann auch durch ein transparentes Substrat erfolgen. In diesem Fall ist dann die Schichtfolge: Substrat-Absorberschicht-Reflektor; der Reflektor kann gegebenenfalls fehlen.

Nach dem Stand der Technik (Bell. Spong; IEEE J. of Quantum Electronics Vol. QE-14 (1978), 7, S. 490; RCA-Reviews 40 (1979), S. 345) soll es vorteilhaft sein, wenn die Dicke gleich 1/4 der Wellenlänge des eingestrahlten Lichtes ist, da durch Interferenz eine besonders hohe Ausnutzung (Schwächung) des eingestrahlten Lichts erreicht wird. Es wurde jedoch gefunden, daß man auch mit Schichtdicken, die deutlich unter 1/4 der Wellenlänge des eingestrahlten Lichts liegen, sehr empfindliche Aufzeichnungsträger erhält.

Die lichtreflektierende Schicht sollte so beschaffen sein, daß diese das zur Aufnahme und zur Abtastung verwendete Licht möglichst quantitativ reflektiert. Geeignete lichtreflektierende Materialien sind z.B. Aluminium, Rhodium, Gold, Titan, Zinn, Blei, Wismut, Kupfer und dielektrische Spiegel. Die Dicke der lichtreflektierenden Schicht soll so sein, daß diese das zur Aufnahme oder zum Abtasten benutzte Licht möglichst vollständig reflektiert.

Für diesen Zweck sind reflektierende Materialien mit geringer Wärmeleitfähigkeit vorteilhaft.

Der Träger bzw. die Licht reflektierende Schicht müssen eine optisch glatte, ebene Oberfläche aufweisen und an der Oberfläche so beschaffen sein, daß die absorbierende Schicht darauf fest haftet.

Als Pigmente (I) kommen vorzugsweise solche der Formeln (II), (V) oder (VI) in Betracht. Diese Pigmente weisen im Bereich von etwa 700 bis 880 nm eine hohe Absorption auf.

Die Pigmente (I) werden in einem Lösungsmittel, das gegebenenfalls ein Bindemittel enthält, angerieben und in Form der erhaltenen Dispersionen durch Schleudern, Rakeln oder Tauchen auf den Träger aufgebracht werden.

Evtl. erforderliche Reflexionsschichten werden zweckmäßigerweise durch Aufdampfen im Vakuum aufgebracht. Je nach dem Aufbau des Systems wird die Reflexionsschicht auf dem Träger oder auf der absorbierenden Schicht aufgebracht. Gegebenenfalls kann auf die Reflexionsschicht auch verzichtet werden. Als Lösungsmittel bzw. als organische Flüssigkeiten für die Dispersion kommen gut entfernbare, wie Methylenchlorid, Chloroform, Aceton, Methylethylketon, Cyclohexan, Toluol, Acetonitril, Essigester, Methanol oder Gemische davon, in Betracht. Als gegebenenfalls anzuwendende Bindemittel sind z.B. Polystyrol, Polyvinylacetat oder Polyvinylpyrrolidon zu nennen.

Zum Beschreiben wird ein modulierter Laserstrahl verwendet. Durch Absorption des eingestrahlten Lichts wird das Medium an der betreffenden Stelle erhitzt. Durch Ablöse-, Schmelz- und/oder Verdampfungsvorgänge ändert sich an dieser Stelle die Reflektivität für Laserlicht.

Zum Aufbringen der Pigmente (I) auf die Träger sind auch die bekannten Druckverfahren wie Hoch-, Tief-, Offset- oder Siebdruck hervorragend geeignet, insbesondere der Offset- und Siebdruck. Nach diesen Druckverfahren können nichtlöschbare Ton- oder Bildträger hergestellt werden. Dazu wird ein geeigneter Träger. z.B. eine Aluminiumplatte, mit einer Dispersion (Farbe), die mindestens ein Pigment (I) enthält, mit einem die gespeicherte Information enthaltenden Muster bedruckt. Die aufgedruckte Information kann in bekannter Weise mit einem Laser, vorzugsweise einem Halbleiterlaser gelesen werden, wobei an den bedruckten Stellen eine geringe und an den nichtbedruckten Stellen eine hohe Reflexion des Laserstrahls erfolgt.

Diese Verfahren sind einfach und kostengünstig und präzise reproduzierbar. Sie liefern Aufzeichnungsmaterialien von hoher Stabilität und Lebensdauer und sind daher vor allem zur Massenfertigung von Tonträgern ("Schallplatten") geeignet.

Die Erfindung wird durch die folgenden Beispiele weiter erläutert. Teile sind Gewichtsteile und Prozente beziehen sich auf das Gewicht.

## A. Pigmente

### Beispiel 1

10 Teile des Farbstoffs XII.1 in Form des Jodids wurden in 330 Teilen 90 %iger Essigsäure bei Rückflußtemperatur gelöst, die Lösung anschließend mit 400 Teilen Wasser verdünnt. Bei 70 ° C wird der Farbstoff durch Zugeben einer in bekannter Weise hergestellten Phosphormolybdänsäurelösung aus 10,4 g Molybdänoxid und 1,0 Teilen Dinatriumphosphat in 210 Teilen Wasser und einem pH-Wert von 2,2 verlackt.

Das Pigment wurde 0,5 Stunden bei 70 ° C nachgerührt und dann abfiltriert. gewaschen und bei 75 ° C getrocknet.

### Beispiel 2

Es wurde entsprechend Beispiel 1 verfahren, jedoch wurde die Heteropolysäure aus 18,3 Teilen Molybdänoxid und 1,76 Teilen Dinatriumphosphat in 230 Teilen Wasser vor der Verlackung mit 4,4 Teilen Dinatriumsulfit reduziert und mit Salzsäure auf einen pH-Wert von 1,0 gestellt.

### Beispiel 3

Es wurde wie in Beispiel 1 verfahren, jedoch wurde anstelle der Phosphormolybdänsäure eine in bekannter Weise hergestellte Heteropolysäure aus 14,4 g Molybdänoxid und 0,6 Teilen Siliciumdioxid in 290 Teilen Wasser und einem pH-Wert von 1 verwendet.

### Beispiel 4

Es wurde wie in Beispiel 1 verfahren, jedoch wurde anstelle der Phosphormolybdänsäure eine in bekannter Weise hergestellte Heteropolysäure aus 3,25 Teilen Molybdänoxid, 5,8 Teilen Wolframoxid und 0,7 Teilen Dinatriumphosphat in 140 Teilen Wasser und einem pH-Wert von 2,2 verwendet.

Beispiel 5

Es wurde wie in Beispiel 1 verfahren, jedoch wurde anstelle der Phosphormolybdänsäure eine in bekannter Weise hergestellte Heteropolysäure aus 7,25 Teilen Molybdänoxid, 11,6 Teile Wolframoxid und 0,63 Teile Siliciumoxid in 230 Teilen Wasser mit einem pH-Wert von 3,0 verwendet.

Beispiel 6

11,4 Teile Farbstoff XIV.2 wurden in 200 Teilen 50 %iger Essigsäure bei 70 ° C gelöst und bei dieser Temperatur mit einer in bekannter Weise hergestellten Heteropolysäure (aus 5,8 Teilen Molybdänoxid und 0,56 Teilen Dinatriumphosphat in 73 Teilen Wasser, die mit 1,4 Teilen $Na_2SO_3$ reduziert und mit Salzsäure auf pH 1,0 gestellt wurde) verlackt.

Das Pigment wurde abfiltriert, gewaschen und getrockent (75 ° C).

Beispiel 7 bis 33

Man verfährt wie in Beispiel 1, 2, 3, 4 oder 5, jedoch werden 10 Teile des in der Tabelle genannten Farbstoffes angewendet.

| Bsp. | Farbstoff-Kation | Gegenion aus Beisp.-Nr. |
|---|---|---|
| 8 | VIII.1 | 1 |
| 9 | VIII.3 | 1 |
| 10 | VIII.7 | 1 |
| 11 | VIII.9 | 2 |
| 12 | IX.1 | 3 |
| 13 | IX.3 | 4 |
| 14 | X.1 | 5 |
| 15 | X.3 | 4 |
| 16 | X.9 | 4 |
| 17 | XI.3 | 5 |
| 18 | XII.1 | 3 |
| 19 | XII.2 | 1 |
| 20 | XII.3 | 2 |
| 21 | XII.4 | 3 |
| 22 | XIII.1 | 3 |
| 23 | XIII.2 | 2 |
| 24 | XIII.4 | 5 |
| 25 | XIII.6 | 5 |
| 26 | XIII.7 | 4 |
| 27 | XIII.9 | 3 |
| 28 | XIII.10 | 2 |
| 29 | XIV.2 | 2 |
| 30 | XIV.5 | 2 |
| 31 | XV.1 | 1 |
| 32 | XV.2 | 1 |

B. Aufzeichnungsmedien

Anwendungsbeispiel 1

Auf eine Glasplatte, die eine 50 nm dicke aufgedampfte Reflektorschicht aus Aluminium trägt, wurde auf die Reflektorschicht die unten angegebene Dispersion aufzentrifugiert. Die Schicht wurde zunächst an der Luft und dann im Vakuum getrocknet.

Die Dispersion wurde wie folgt hergestellt:

0,1 g des Pigments, das nach Beispiel 1 mit dem Farbstoff XII.1 in Form des Jodids hergestellt worden war, und 0,2 g Polyvinylacetat wurden in 15 ml Methylethylketon zu einer Dispersion angerieben.

Gegenüber Beschichtungen mit molekulardispersen kationischen Farbstoffen, wie XII.1 (Gegenionen: $ClO_4^{\ominus}$, $BF_4^{\ominus}$ oder $CF_3CO_2^{\ominus}$), weisen Schichten mit den entsprechenden verlackten Farbstoffen eine wesentlich höhere Stabilität gegen Wärme und insbesondere gegen Licht auf. Ebenso beobachtet man bei letzteren Schichten keine Änderung der Morphologie wie Kristallisation oder Auskreiden.

Der erhaltene Aufzeichnungsträger wurde mit Lichtpulsen eines Halbleiter-Lasers (820 nm) mit einer Intensität von 60 mW und einer Länge von 100 nsec bestrahlt (beschrieben), wobei die Strahlung auf einen Brennfleck von 1,0 µm ϕ auf der Oberfläche der Farbstoffschicht fokussiert war.

Zur Wiedergabe wurde ein nicht modulierter, in der gleichen Weise fokussierter Strahl eines Halbleiter-Lasers, der durch Filter auf 1 mW abgeschwächt wurde, über die beschriebenen Stellen des Aufzeichnungsmediums geführt und das vom Medium reflektierte Licht mit einem Fotodetektor gemessen. Die Reflexion an einer vorher beschriebenen Stelle unterscheidet sich aufgrund der Veränderung der Schicht deutlich von einer unbeschriebenen Stelle, was an dieser Stelle vom Fotodetektor festgestellt werden kann.

Trotz wesentlich höherer Stabilität gegen Licht und Wärme weist die Schicht, die XII.1 in verlackter Form enthält, eine mindestens ebenso hohe Empfindlichkeit auf wie Schichten, welche den entsprechenden molekulardispersen Farbstoff enthalten.

Anwendungsbeispiel 2

Auf eine PMMA-Platte wurde in einer Vakuumapparatur eine Reflektor-Schicht aus Aluminium aufgedampft (Schichtdicke: 50 nm). Eine Suspension von 0,1 g des Pigments, das als Kation (VIII.3) und ein Gegenion, wie in Beispiel 3 beschrieben enthält, in einer Lösung von 0,2 g Polyvinylacetat in 20 g Methylethylketon wurde auf den verspiegelten PMMA-Träger aufgeschleudert und die Farbstoffschicht an der Luft, dann im Vakuum bei Raumtemperatur getrocknet.

Das erhaltene Aufzeichnungsmedium konnte wie das des Anwendungsbeispiels 1 mit einem Halbleiter-Laser (820 nm) beschrieben werden.

Anwendungsbeispiele 3 bis 18

Es wurde wie im Anwendungsbeispiel 2 verfahren und auf eine mit Aluminium (ca. 50 nm Schichtdicke) verspiegelte PMMA-Platte eine Pigmentdispersion aufgeschleudert.

Es wurden folgende Pigmente verwendet:

| Beispiel | Pigment (I) mit Kation | Gegenion aus Bsp. |
|---|---|---|
| 3 | XII.1 | 4 |
| 4 | XII.2 | 1 |
| 5 | XII.3 | 2 |
| 6 | VIII.3 | 5 |
| 7 | VIII.7 | 1 |
| 8 | X.1 | 2 |
| 9 | VIII.1 | 3 |
| 10 | X.3 | 4 |
| 11 | X.9 | 5 |
| 12 | IX.1 | 2 |
| 13 | IX.1 | 5 |
| 14 | XIII.1 | 1 |
| 15 | XIII.6 | 2 |
| 16 | XIV.2 | 4 |
| 17 | XV.2 | 4 |
| 18 | XV.1 | 5 |

**Patentansprüche**

**1.** Pigmente der allgemeinen Formel

F • Het,

in der

F für ein Kation eines kationischen Farbstoffs mit einem Absorptionsmaximum > 700 nm, der gegebenenfalls noch anionische Gruppen enthält, der allgemeinen Formeln

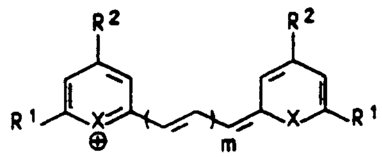

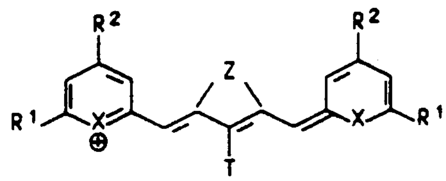

,

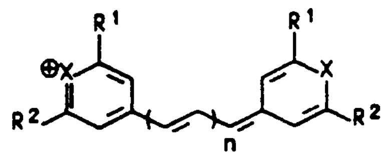

,

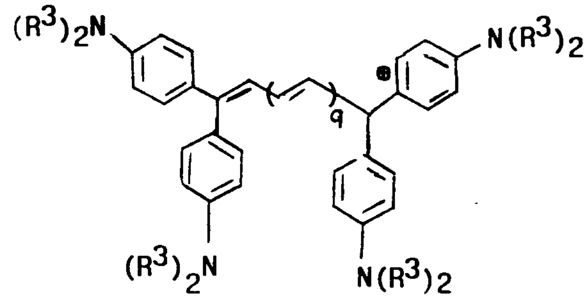

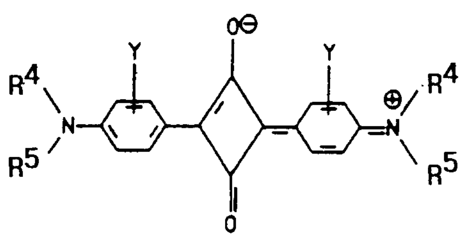

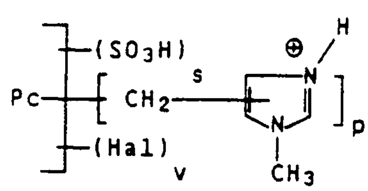

oder

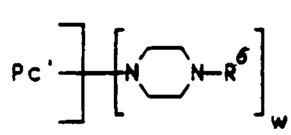

steht, wobei in den Formeln $R^1$ und $R^2$ unabhängig voneinander für $C_1$- bis $C_4$-Alkyl, für gegebenenfalls durch Hydroxy, $C_1$- bis $C_4$-Alkyl, $C_1$- bis $C_4$-Alkoxy oder Halogen substituiertes Phenyl oder Heteroaryl,
Z für $-(CH_2-)_r$, worin r = 2 oder 3 bedeutet,
T für Phenyl oder Halogen,
X für Sauerstoff oder Schwefel,
m und n jeweils für 0, 1 oder 2,
$R^3$ unabhängig voneinander für $C_1$- bis $C_4$-Alkyl,
q für 1 oder 2,
$R^4$ und $R^5$ unabhängig voneinander für Wasserstoff, $C_1$- bis $C_6$-Alkyl, $C_2$- bis $C_6$-Hydroxylalkyl, $C_1$- bis $C_4$-Alkoxy-$C_2$- oder -$C_3$-alkyl, Allyl, 2-($C_2$- bis $C_4$-Alkanoyloxy)-ethyl oder 2-Cyanethyl oder

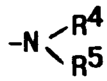

für einen Rest eines gesättigten 5- oder 6-gliedrigen heterocyclischen Rings,
Y für Wasserstoff, Hydroxy, $C_1$- bis $C_4$-Alkyl oder $C_1$- bis $C_4$-Alkoxy,
Pc für einen (p + s + v)-wertigen Rest eines metallfreien Phthalocyanins oder eines Metallphthalocyanins, das als zentrales Metall VO, TiO, Pb, Sn, Cu, Ni oder Mn enthält,
und wobei die Methylengruppe an ein C-Atom des Imidazolrings gebunden ist,
p für eine Zahl von 1 bis 4,
s für 0 oder 1,
v für 0, 1, 2, 3 oder 4,
Pc' für einen w-wertigen Rest eines metallfreien Phthalocyanins oder eines Metallphthalocyanins, das als zentrales Metall VO, TiO, Pb, Sn, Cu, Ni oder Mn enthält,
Hal für Brom, vorzugsweise für Chlor oder Fluor,
$R^6$ für $C_1$- bis $C_4$-Alkyl, $C_2$- bis $C_4$-Hydroxyalkyl, $C_2$- bis $C_4$-Aminoalkyl und
w für 1, 2, 3 oder 4 stehen, und
Het ein Anion einer Heteropolysäure auf der Basis Wolfram, Molybdän, Vanadium oder Gemischen davon mit Phosphor, Silicium, Kobalt, Aluminium, Mangan, Chrom, Nickel oder Gemischen davon oder ein Kupfer(I)-hexacyanoferrat-(II)-Anion $[Cu_3Fe(CN)_6]^{\ominus}$ bedeutet,
erhältlich durch Verlacken der kationischen Farbstoffe mit den Heteropolysäuren.

2. Pigmente nach Anspruch 1, dadurch gekennzeichnet, daß F für ein Farbstoffkation der Formeln

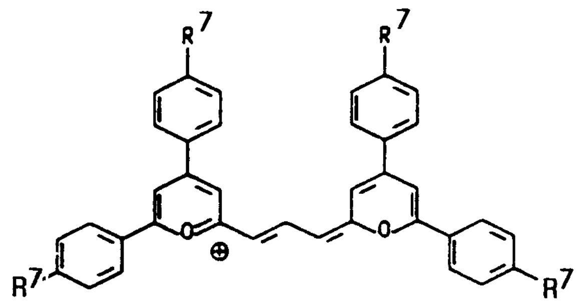

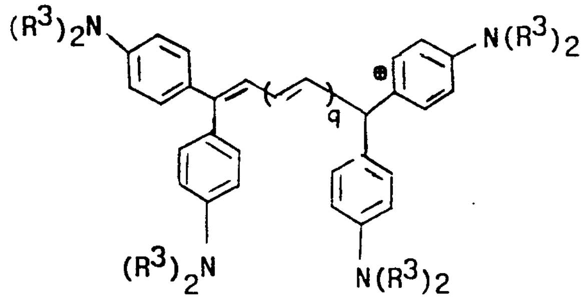

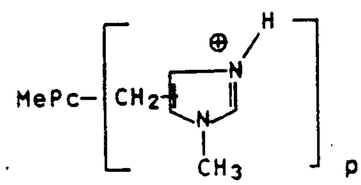

oder

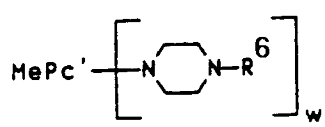

steht, wobei in den Formeln
$R^7$ für Wasserstoff, $C_1$- bis $C_4$-Alkyl oder $C_1$- bis $C_4$-Alkoxy,
$R^3$ für Methyl oder Ethyl,
$R^6$ für $C_1$- bis $C_4$-Alkyl, 2-Hydroxyethyl oder 2-Aminoethyl,
MePc für p-wertiges Vanadyl-, Blei-, Zinn- oder Manganphthalocyanin,
MePc' für w'-wertiges Vanadyl-, Blei-, Zinn- oder Manganphthalocyanin,
p für 1, 2, 3 oder 4 und
w' für 4 stehen.

3. Pigmente erhältlich durch Verlacken von kationischen Farbstoffen, deren Kationen den allgemeinen Formeln

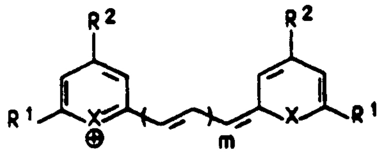

,

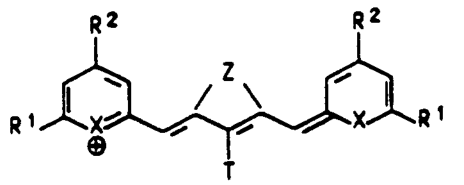

,

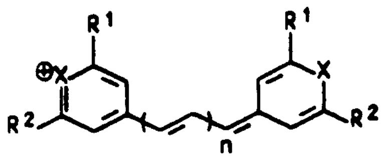

,

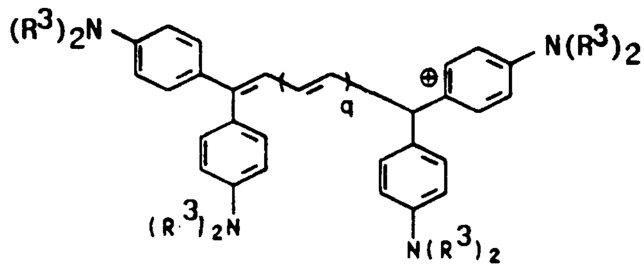

,

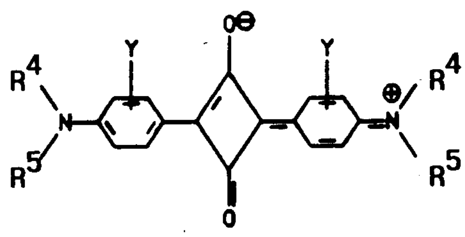

,

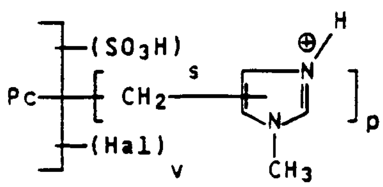

oder

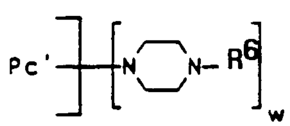

entsprechen, mit Heteropolysäuren auf der Basis Wolfram, Molybdän, Vanadium oder Gemischen davon mit Phosphor, Silicium, Kobalt, Aluminium, Mangan, Chrom, Nickel oder Gemischen davon oder mit Kupfer-I-hexacyanoferrat-II($Cu(Fe(CN)_6)^{\ominus}$), wobei in den Formeln $R^1$ und $R^2$ unabhängig voneinander für $C_1$- bis $C_4$-Alkyl, für gegebenenfalls durch Hydroxy, $C_1$- bis $C_4$-Alkyl, $C_1$- bis $C_4$-Alkoxy oder Halogen substituiertes Phenyl oder Heteroaryl,

Z für $-(CH_2-)_r$, worin r = 2 oder 3 bedeutet,

T für Phenyl oder Halogen,

X für Sauerstoff oder Schwefel,

m und n jeweils für 0, 1 oder 2,
$R^3$ unabhängig voneinander für $C_1$- bis $C_4$-Alkyl,
q für 1 oder 2,
$R^4$ und $R^5$ unabhängig voneinander für Wasserstoff, $C_1$- bis $C_6$-Alkyl, $C_2$- bis $C_6$-Hydroxyalkyl, $C_1$- bis $C_4$-Alkoxy-$C_2$- oder -$C_3$-alkyl, Allyl, 2-($C_2$- bis $C_4$-Alkanoyloxy)-ethyl oder 2-Cyanethyl oder

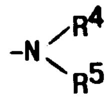

für einen Rest eines gesättigten 5- oder 6-gliedrigen heterocyclischen Rings,
Y für Wasserstoff, Hydroxy, $C_1$- bis $C_4$-Alkyl oder $C_1$- bis $C_4$-Alkoxy,
Pc für einen (p + s + v)-wertigen Rest eines metallfreien Phthalocyanins oder eines Metallphthalocyanins, das als zentrales Metall VO, TiO, Pb, Sn, Cu, Ni oder Mn enthält,
und wobei die Methylengruppe an ein C-Atom des Imidazolrings gebunden ist,
p für eine Zahl von 1 bis 4,
s für 0 oder 1,
v für 0, 1, 2, 3 oder 4,
Pc' für einen w-wertigen Rest eines metallfreien Phthalocyanins oder eines Metallphthalocyanins, das als zentrales Metall VO, TiO, Pb, Sn, Cu, Ni oder Mn enthält,
Hal für Brom oder vorzugsweise Chlor oder Fluor,
$R^6$ für $C_1$- bis $C_4$-Alkyl, $C_2$- bis $C_4$-Hydroxyalkyl, $C_2$- bis $C_4$-Aminoalkyl und
w für 1, 2, 3 oder 4 stehen.

**4.** Verwendung der Pigmente gemäß den Ansprüchen 1 bis 3 zum Pigmentieren von Druckfarben für den Hoch-, Tief-, Sieb- oder Offsetdruck.

**5.** Verwendung der Pigmente gemäß den Ansprüchen 1 bis 3 zum Pigmentieren von Kunststoffen.

**6.** Verwendung der Pigmente gemäß den Ansprüchen 1 bis 3 als Absorberschicht in Solarkollektoren.

**7.** Verwendung der Pigmente gemäß den Ansprüchen 1 bis 3 als Absorbermaterialien in optischen Aufzeichnungsmedien.

## Claims

**1.** A pigment of the formula

F • Het

where F is a cation of a cationic dye which has an absorption maximum at > 700 nm and may or may not contain anionic groups, of the formulae

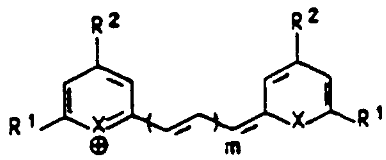

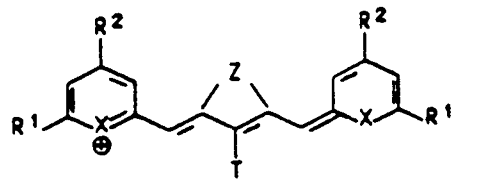

,

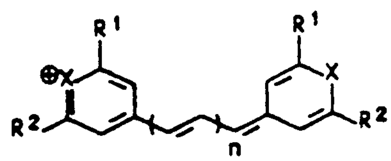

,

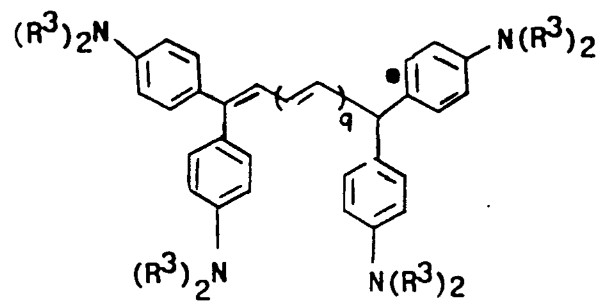

,

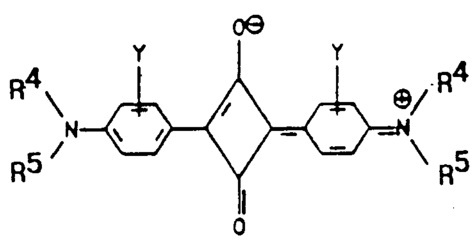

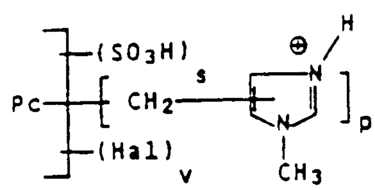

or

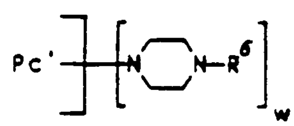

and, in the formulae, $R^1$ and $R^2$ independently of one another are each $C_1$-$C_4$-alkyl or are each heteroaryl or phenyl which is unsubstituted or substituted by hydroxyl, $C_1$-$C_4$-alkyl, $C_1$-$C_4$-alkoxy or halogen, Z is $-(CH_2-)_r$, where r is 2 or 3, T is phenyl or halogen, X is oxygen or sulfur, m and n are each 0, 1 or 2, each $R^3$ is independently $C_1$-$C_4$-alkyl, q is 1 or 2, $R^4$ and $R^5$ are, independently of one

another, hydrogen, $C_1$-$C_6$-alkyl, $C_2$-$C_6$-hydroxyalkyl, $C_1$-$C_4$-alkoxy-$C_2$- or $C_3$-alkyl, allyl, 2-($C_2$- to $C_4$-alkanoyloxy)ethyl or 2-cyanoethyl, or

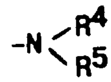

is a radical of a saturated 5- or 6-membered heterocyclic ring, Y is hydrogen, hydroxyl, $C_1$-$C_4$-alkyl or $C_1$-$C_4$-alkoxy, Pc is a (p+s+v) valent radical or a metal-free phthalocyanine or of a metal phthalocyanine which contains VO, TiO, Pb, Sn, Cu, Ni or Mn as the central metal atom and in which the methylene group is bonded to a carbon atom of the imidazole ring, p is 1 to 4, s is 0 or 1, v is 0, 1, 2, 3 or 4, Pc' is a w valent radical of a metal-free phthalocyanine or of a metal phthalocyanine which contains VO, TiO, Pb, Sn, Cu, Ni or Mn as the central metal, Hal is bromine, preferably chlorine or fluorine, $R^6$ is $C_1$-$C_4$-alkyl, $C_2$-$C_4$-hydroxyalkyl or $C_2$-$C_4$-aminoalkyl and w is 1, 2, 3 or 4, and Het is an anion of a heteropolyacid based on tungsten, molybdenum, vanadium or a mixture of these with phosphorus, silicon, cobalt, aluminum, manganese, chromium, nickel or a mixture of these or is a copper(I) hexacyanoferrate(II) anion $[Cu_3Fe(CN)_6]^{\ominus}$, the pigment being obtainable by laking the cationic dye with the heteropolyacid.

2. A pigment as claimed in claim 1, wherein F is a dye cation of the formula

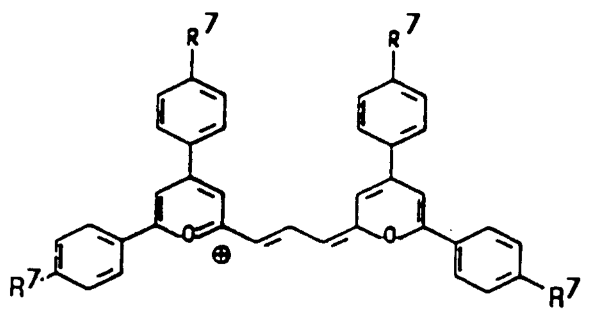

,

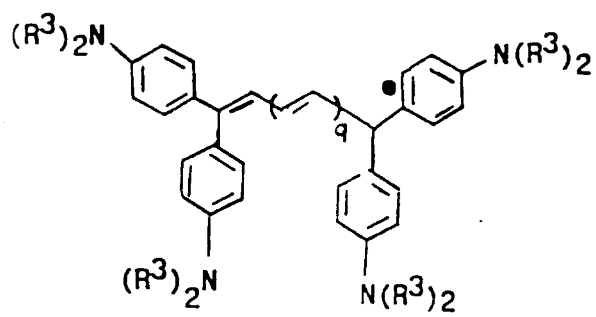

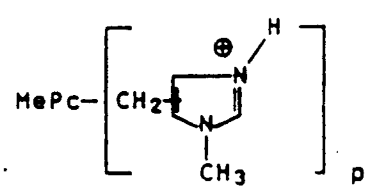

or

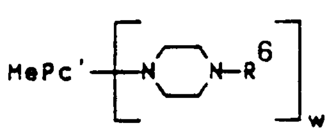

where $R^7$ is hydrogen, $C_1$-$C_4$-alkyl or $C_1$-$C_4$-alkoxy, $R^3$ is methyl or ethyl, $R^6$ is $C_1$-$C_4$-alkyl, 2-

hydroxyethyl or 2-aminoethyl, MePc is a p-valent vanadyl, lead, tin or manganese phthalocyanine, MePc' is a w'-valent vanadyl, lead, tin or manganese phthalocyanine, p is 1, 2, 3 or 4 and w' is 4.

**3.** A pigment obtainable by laking a cationic dye in which the cation is of the formula

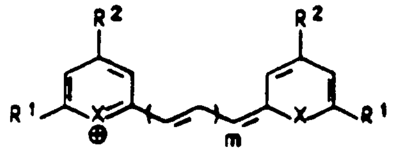
,

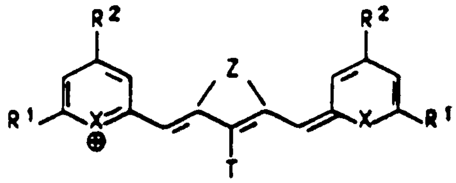
,

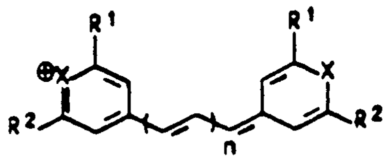
,

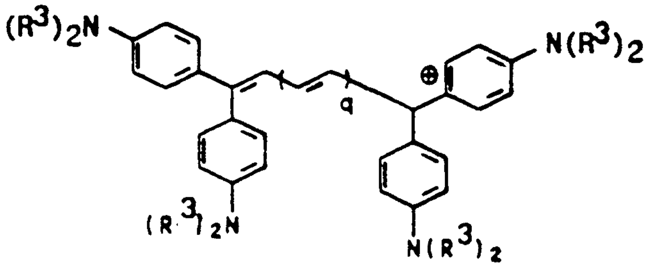
,

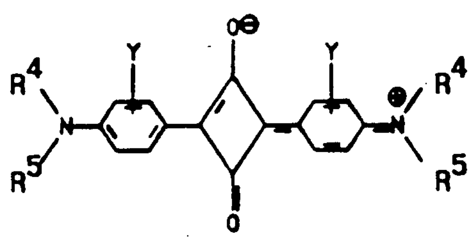
,

or

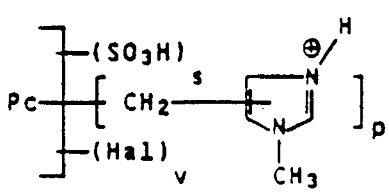
.

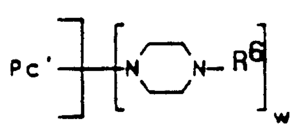

with a heteropolyacid based on tungsten, molybdenum, vanadium or a mixture of these with phosphorus, silicon, cobalt, aluminum, manganese, chromium, nickel or a mixture of these or with copper(I) hexacyanoferrate(II) ($[Cu_3Fe(CN)_6]^{\ominus}$), where, in the formulae, $R^1$ and $R^2$ independently of one another are each $C_1$-$C_4$-alkyl or are each heteroaryl or phenyl which is unsubstituted or substituted by hydroxyl, $C_1$-$C_4$-alkyl, $C_1$-$C_4$-alkoxy or halogen, Z is $-(CH_2-)_r$, where r is 2 or 3, T is phenyl or halogen, X is oxygen or sulfur, m and n are each 0, 1 or 2, each $R^3$ is independently $C_1$-$C_4$-alkyl, q is 1 or 2, $R^4$ and $R^5$ are, independently of one another, hydrogen, $C_1$-$C_6$-alkyl, $C_2$-$C_6$-hydroxyalkyl, $C_1$-$C_4$-alkoxy-$C_2$- or $C_3$-alkyl, allyl, 2-($C_2$- to $C_4$-alkanoyloxy)ethyl or 2-cyanoethyl, or

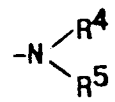

is a radical of a saturated 5- or 6-membered heterocyclic ring, Y is hydrogen, hydroxyl, $C_1$-$C_4$-alkyl or $C_1$-$C_4$-alkoxy, Pc is a (p+s+v) valent radical of a metal-free phthalocyanine or of a metal phthalocyanine which contains VO, TiO, Pb, Sn, Cu, Ni or Mn as the central metal atom and in which the methylene group is bonded to a carbon atom of the imidazole ring, p is 1 to 4, s is 0 or 1, v is 0, 1, 2, 3 or 4, Pc' is a w valent radical of a metal-free phthalocyanine or of a metal phthalocyanine which contains VO, TiO, Pb, Sn, Cu, Ni or Mn as the central metal, Hal is bromine, preferably chlorine or fluorine, $R^6$ is $C_1$-$C_4$-alkyl, $C_2$-$C_4$-hydroxyalkyl or $C_2$-$C_4$-aminoalkyl and w is 1, 2, 3 or 4.

**4.** The use of a pigment as claimed in any of claims 1 to 3 for pigmenting printing inks for letterpress, gravure, screen or offset printing.

**5.** The use of a pigment as claimed in any of claims 1 to 3 for pigmenting plastics.

**6.** The use of a pigment as claimed in any of claims 1 to 3 as an absorber layer in solar collectors.

**7.** The use of a pigment as claimed in any of claims 1 to 3 as an absorber material in optical recording media.

**Revendications**

**1.** Pigments de la formule générale

F • Het,

dans laquelle

F représente un cation d'un colorant cationique présentant un maximum d'absorption supérieur à 700 nm, qui contient éventuellement aussi des radicaux anioniques, des formules générales

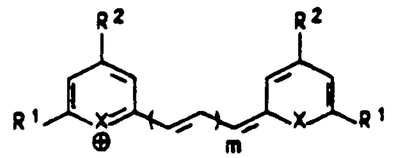

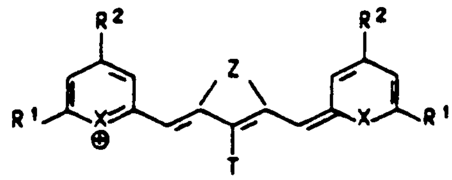

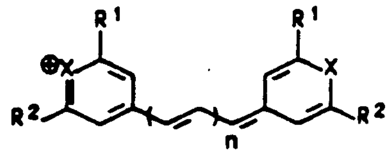

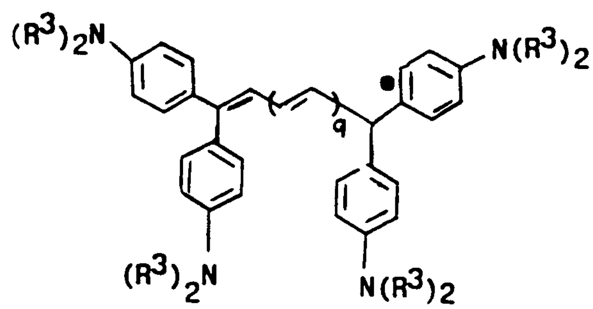

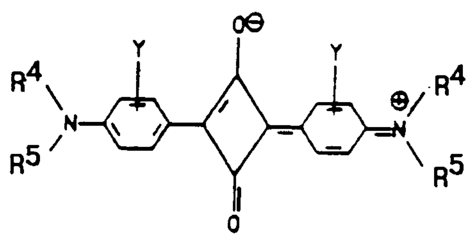

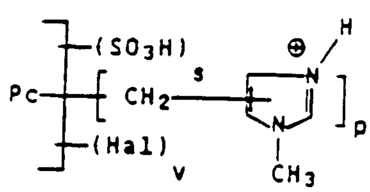

ou

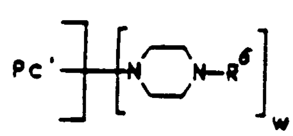

formules dans lesquelles $R^1$ et $R^2$ représentent, chacun indépendamment l'un de l'autre, un radical alkyle en $C_1$ à $C_4$, un radical hétéroaryle ou phényle, éventuellement substitué par des radicaux hydroxyle, alkyle en $C_1$ à $C_4$, alcoxy en $C_1$ à $C_4$ ou des atomes d'halogènes,

Z représente $-(CH_2-)_r$ où r est égal à 2 ou à 3,
T représente le radical phényle ou un atome d'halogène,
X représente un atome d'oxygène ou de soufre,
m et n sont chacun égaux à 0, 1 ou 2,

les symboles $R^3$ représentent, chacun indépendamment l'un de l'autre, un radical alkyle en $C_1$ à $C_4$,

q est égal à 1 ou à 2,
$R^4$ et $R^5$ représentent, chacun indépendamment l'un de l'autre, un atome d'hydrogène, un radical alkyle en $C_1$ à $C_6$, hydroxyalkyle en $C_2$ à $C_6$, alcoxy($C_1$-$C_4$)alkyle($C_2$-$C_3$), allyle, 2-(alcanoyloxy en $C_2$ à $C_4$)éthyle, ou 2-cyanoéthyle, ou représente le reste d'un noyau hétérocyclique pentagonal ou hexagonal saturé,
Y représente un atome d'hydrogène, un radical hydroxyle, alkyle en $C_1$ à $C_4$, ou alcoxy en $C_1$ à $C_4$,
Pc représente un reste (p + s + v)-valent d'une phtalocyanine dépourvue de métal, ou d'une phtalocyanine de métal qui contient, à titre de métal central, VO, TiO, Pb, Sn, Cu, Ni ou Mn,

et où le groupe méthylène est lié à un atome de carbone du noyau imidazole,

p représente un nombre dont la valeur varie de 1 à 4,
s est égal à 0 ou à 1,
v est égal à 0, 1, 2, 3 ou 4,
Pc' représente le reste w-valent d'une phtalocyanine dépourvue de métal ou d'une phtalocyanine de métal qui contient, à titre de métal central, VO, TiO, Pb, Sn, Cu, Ni ou Mn,
Hal représente un atome de brome, de préférence cependant un atome de chlore ou de fluor,
$R^6$ représente un radical alkyle en $C_1$ à $C_4$, hydroxyalkyle en $C_2$ à $C_4$, aminoalkyle en $C_2$ à $C_4$ et
w est égal à 1, 2, 3 ou 4 et
Het représente un anion d'un hétéropolyacide à base de tungstène, de molybdène, de vanadium ou de leurs mélanges avec le phosphore, le silicium, le cobalt, l'aluminium, le manganèse, le chrome, le nickel ou leurs mélanges, ou un anion cuivre(I)-hexacyanoferrate-(II) $/Cu_3Fe(CN)_6/^{\ominus}$,

que l'on peut obtenir par transformation en laques des colorants cationiques avec les hétéropolyacides.

**2.** Pigments suivant la revendication 1, caractérisés en ce que F représente un cation de colorant répondant aux formules

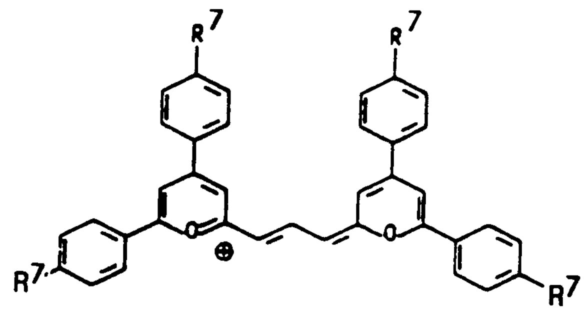

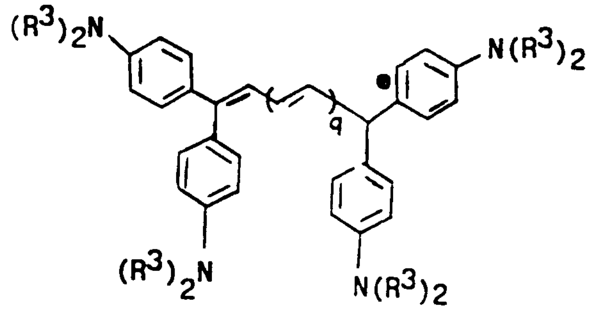

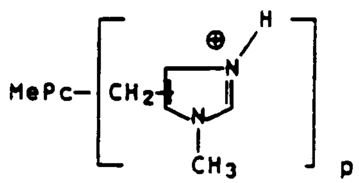

ou

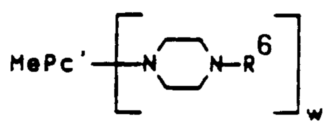

formules dans lesquelles

| | |
|---|---|
| $R^7$ | représente un atome d'hydrogène, un radical alkyle en $C_1$ à $C_4$, ou alcoxy en $C_1$ à $C_4$, |
| $R^3$ | représente le radical méthyle ou éthyle, |
| $R^6$ | représente un radical alkyle en $C_1$ à $C_4$, 2-hydroxyéthyle, ou 2-aminoéthyle, |
| MePc | représente une vanadylphtalocyanine, une phtalocyanine de plomb, d'étain ou de manganèse, p-valente, |
| MePc' | représente une vanadylphtalocyanine, une phtalocyanine de plomb, d'étain, ou de manganèse, w-valente, |
| p | est égal à 1, 2, 3 ou 4 et |
| w' | est égal à 4. |

3. Pigments que l'on peut obtenir par la transformation en laques de colorants cationiques, dont les cations répondent aux formules générales qui suivent

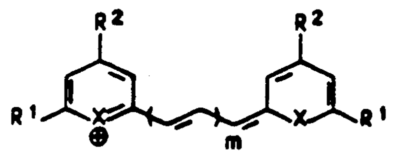

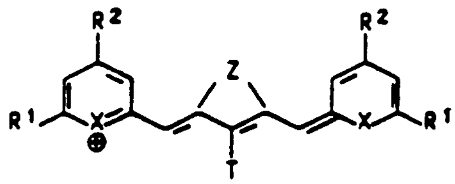

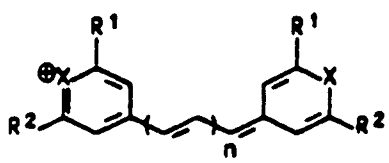

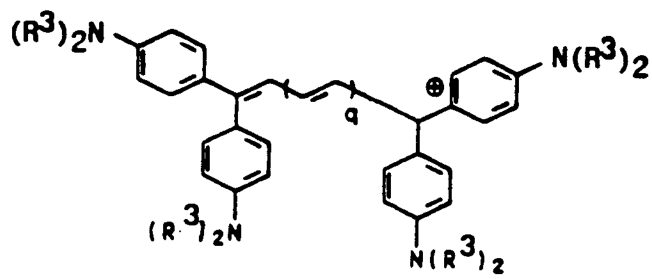

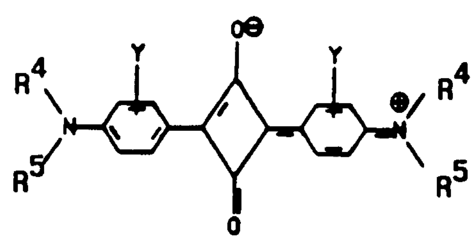

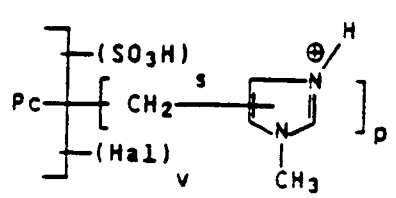 ou

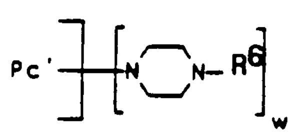

avec des hétéropolyacides à base de tungstène, de molybdène, de vanadium ou de mélanges de ceux-ci avec du phosphore, du silicium, du cobalt, de l'aluminium, du manganèse, du chrome, du nickel ou leurs mélanges, ou avec du cuivre-I-hexacyanoferrate-II($Cu(Fe(CN)_6)^{\ominus}$), où dans les formules dans lesquelles $R^1$ et $R^2$ représentent, chacun indépendamment l'un de l'autre, un radical alkyle en $C_1$ à $C_4$, un radical hétéroaryle ou phényle, éventuellement substitué par des radicaux hydroxyle, alkyle en $C_1$ à

$C_4$, alcoxy en $C_1$ à $C_4$ ou des atomes d'halogènes,

Z représente $-(CH_2-)_r$ où r est égal à 2 ou à 3,

T représente le radical phényle ou un atome d'halogène,

X représente un atome d'oxygène ou de soufre,

m et n sont chacun égaux à 0, 1 ou 2,

les symboles $R^3$ représentent, chacun indépendamment l'un de l'autre, un radical alkyle en $C_1$ à $C_4$,

q est égal à 1 ou à 2,

$R^4$ et $R^5$ représentent, chacun indépendamment l'un de l'autre, un atome d'hydrogène, un radical alkyle en $C_1$ à $C_6$, hydroxyalkyle en $C_2$ à $C_6$, alcoxy($C_1$-$C_4$)alkyle($C_2$-$C_3$), allyle, 2-(alcanoyloxy en $C_2$ à $C_4$)éthyle, ou 2-cyanoéthyle, ou

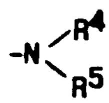

représente le reste d'un noyau hétérocyclique pentagonal ou hexagonal saturé,

Y représente un atome d'hydrogène, un radical hydroxyle, alkyle en $C_1$ à $C_4$, ou alcoxy en $C_1$ à $C_4$,

Pc représente un reste (p + s + v)-valent d'une phtalocyanine dépourvue de métal, ou d'une phtalocyanine de métal qui contient, à titre de métal central, VO, TiO, Pb, Sn, Cu, Ni ou Mn,

et où le groupe méthylène est lié à un atome de carbone du noyau imidazole,

p représente un nombre dont la valeur varie de 1 à 4,

s est égal à 0 ou à 1,

v est égal à 0, 1, 2, 3 ou 4,

Pc' représente le reste w-valent d'une phtalocyanine dépourvue de métal ou d'une phtalocyanine de métal qui contient, à titre de métal central, VO, TiO, Pb, Sn, Cu, Ni ou Mn,

Hal représente un atome de brome, de préférence cependant un atome de chlore ou de fluor,

$R^6$ représente un radical alkyle en $C_1$ à $C_4$, hydroxyalkyle en $C_2$ à $C_4$, aminoalkyle en $C_2$ à $C_4$ et

w est égal à 1, 2, 3 ou 4.

**4.** Utilisation des pigments suivant les revendications 1 à 3 pour la pigmentation d'encres d'imprimerie destinées à l'impression en relief ou typographique, l'impression en taille douce ou en creux ou en rotogravure, l'impression sérigraphique ou l'impression offset.

**5.** Utilisation des pigments suivant l'une quelconque des revendications 1 à 3 pour la pigmentation de matières plastiques.

**6.** Utilisation des pigments suivant l'une quelconque des revendications 1 à 3 à titre de couche absorbante dans des collecteurs solaires.

**7.** Utilisation des pigments suivant l'une quelconque des revendications 1 à 3 à titre de matières absorbantes dans des milieux d'enregistrement optique.